# EUROPEAN PATENT SPECIFICATION

(11) **EP 3 448 944 B1**
(45) Date of publication and mention of the grant of the patent: **11.11.2026**
(21) Application number: 17790211.1
(22) Date of filing: 25.04.2017
(51) Int. Cl.: C09K 3/18, C09D 183/04

(54) **ARTICLES SUBJECT TO ICE FORMATION COMPRISING A REPELLENT SURFACE COMPRISING A SILOXANE MATERIAL**
GEGENSTÄNDE, DIE EISBILDUNG AUSGESETZT SIND, MIT EINER ABWEISENDEN OBERFLÄCHE MIT EINEM SILOXANMATERIAL
ARTICLES SOUMIS À LA FORMATION DE GLACE COMPRENANT UNE SURFACE RÉPULSIVE COMPRENANT UN MATÉRIAU DE SILOXANE

(30) Priority: 26.04.2016 US 201662327799 P
(43) Date of publication of application: 06.03.2019
(73) Proprietor: 3M Innovative Properties Company, St. Paul, MN 55133-3427 (US)
(72) Inventor: MEULER, Adam J., Saint Paul, MN 55133-3427 (US); ELSBERND, Cheryl S., Saint Paul, MN 55133-3427 (US)
(74) Representative: Mathys & Squire
(86) International application number: PCT/US2017/029240
(87) International publication number: WO 2017/189475

(56) References cited:
- WO-A1-2008/104063
- WO-A1-2014/107811
- WO-A1-2014/107811
- WO-A1-2016/176350
- WO-A1-2016/176350
- WO-A1-2017/074817
- JP-A- 2010 222 559
- US-A1- 2005 143 541
- US-A1- 2009 081 384
- US-A1- 2013 045 332
- US-A1- 2015 030 796
- US-B1- 6 511 753

## Description

### Field

Articles subject to ice formation during normal use, are described as well as methods of making such an article

### Background

US 2014/088219 A1 describes a one-package moisture curable composition comprising, by weight percentage based on the dry weight of the composition, from 10 to 99% at least one silane terminated polyurethane based polymer and from 1 to 90% at least one silane terminated polysiloxane based polymer; the composition, after being moisture cured, forms a surface whose water contact angle is larger than 101° and mentions that the composition is suitable for applications in coatings which afford low surface energy surface and improved mechanical performance, such as marine antifouling coating, anti-icing coating, anti-stain coating, self-cleaning coating, and non-sticky coating.

### Summary

In one aspect an article subject to ice formation during normal use is provided as set out in claim 1. The article comprising a repellent surface such that the receding contact angle of the surface with water ranges from 90 degrees to 135 degrees wherein the repellent surface comprises a siloxane material and a non-fluorinated organic polymeric binder, the siloxane material comprising terminal silane groups and pendent hydrocarbon groups wherein at least one hydrocarbon groups averaging at least 8 carbon atoms. The article is selected from heat exchangers of air conditioners or refrigeration; sign faces, signal transmission lines, telephone and electrical cables, satellite dishes, antennas, wind turbine blades, automobiles, railroad cars, aircraft, watercraft, ice manufacturing articles; ice-cube trays; commercial and residential refrigerators and freezers; cryogenic facilities; buildings, roofing, dams, oil drilling platforms, outdoor sporting equipment, recreational vehicles; and snow removal equipment.

In another aspect a method of making an article as set out in claim 11..

### Brief Description of the Drawings

FIG. 1 is cross-sectional view of an embodied substrate comprising a repellent surface layer.
FIG. 2 is cross-sectional view of another embodiment of an article comprising a repellent surface;

### Detailed Description

Presently described are articles or components thereof that are subject to ice formation during their normal use. The term "ice" includes any form of frozen water including frost, freezing rain, sleet and snow.

Articles include sign faces (such as sign faces of transportation signs), signal transmission lines (e.g., telephone and electrical cables), satellite dishes, antennas, wind turbine blades, automobiles, railroad cars, aircraft, watercraft, , heat exchangers of air conditioners or refrigeration, ice manufacturing articles including ice-cube trays and other "ice maker" components; commercial and residential refrigerators and freezers; cryogenic facilities; buildings, roofing, dams (especially near a lock), oil drilling platforms, outdoor sporting equipment; recreational vehicles such as snowmobiles, and snow removal equipment.

A heat exchanger is an article used to transfer heat between one or more fluids. The fluids may be separated by a solid wall to prevent mixing or they may be in direct contact. They are widely used in space heating, refrigeration, air conditioning, power stations, chemical plants, petrochemical plants, petroleum refineries, natural-gas processing, and sewage treatment. A classic example of a heat exchanger is found in an internal combustion engine in which a circulating fluid known as engine coolant flows through radiator coils and air flows past the coils, which cools the coolant and heats the incoming air.

Types of heat exchangers include: shell and tube heat exchanger, plate heat exchangers, plate and shell heat exchanger, adiabatic wheel heat exchanger, plate fin heat exchanger, pillow plate heat exchanger, fluid heat exchanger, waste heat recovery units, dynamic scraped surface heat exchanger, phase-change heat exchangers, direct contact heat exchangers, microchannel heat exchangers.

One of the widest uses of heat exchangers is for air conditioning of buildings and vehicles. This class of heat exchangers is commonly called air coils, or just coils due to their often-serpentine internal tubing. Liquid-to-air, or air-to-liquid HVAC (i.e. heating, ventilation and air conditioning) coils are typically of modified crossflow arrangement. In vehicles, heat coils are often called heater cores.

On the liquid side of these heat exchangers, the common fluids are water, a water-glycol solution, steam, or a refrigerant. For heating coils, hot water and steam are the most common, and this heated fluid is supplied by boilers, for example. For cooling coils, chilled water and refrigerant are most common. Chilled water is supplied from a chiller that is potentially located very far away, but refrigerant must come from a nearby condensing unit. When a refrigerant is used, the cooling coil is the evaporator in the vapor-compression refrigeration cycle. HVAC coils that use this direct-expansion of refrigerants are commonly called DX coils. Some DX coils are "microchannel" type.

On the air side of HVAC coils a significant difference exists between those used for heating, and those for cooling. Air that is cooled often has moisture condensing out of it, except with extremely dry air flows. Heating some air increases that airflow's capacity to hold water. Thus, heating coils need not consider moisture condensation on their air-side. However, cooling coils are designed and selected to handle latent (moisture) as well as the adequate (cooling) loads. The water that is removed is called condensate.

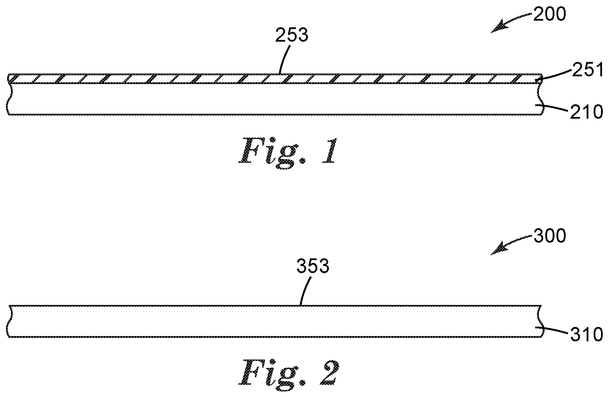

With reference to Fig. 1, article 200 comprises substrate 210 comprising a (e.g. liquid) repellent surface layer (e.g. layer) 251 that comprises a e.g. non-fluorinated organic polymeric binder and a siloxane material, the siloxane material comprising terminal silane groups and pendent hydrocarbon groups wherein at least one hydrocarbon groups averaging at least 8 carbon atoms. The concentration of siloxane material at the outer exposed surface 253 is typically higher than the concentration of siloxane material within the. non-fluorinated organic polymeric binder layer 251 proximate substrate 210. The (e.g. liquid) repellent surface layer can be provided by coating substrate 210 with a coating composition comprising an organic solvent, a non-fluorinated organic polymeric binder, and a siloxane material; as will subsequently be described.

With reference to Fig. 2, article 300 comprises substrate 310 comprising a (e.g. liquid) repellent surface (e.g. layer) 353 that comprises a siloxane material. The concentration of siloxane material at the outer exposed surface (e.g. layer) 353 is typically higher than the concentration of siloxane material proximate the center of the substrate 310. In one embodiment, the (e.g. liquid) repellent surface 353 can be provided by including a siloxane material, such as a siloxane compound, as a melt additive in a polymeric material that is thermally processed to form substrate 310 into a component or a surface layer thereof.

The repellent surface repels ice and typically also repels liquids such as water, aqueous solutions and mixtures including paint.

In some embodiments, the inclusion of the repellent surface can aid in the removal of ice accumulation from the repellent surface. For example, the inclusion of the repellent surface may reduce the force required to remove the ice from the repellent surface. Further, the article may be capable of repeatedly releasing ice from the repellent surface.

In other embodiments, the inclusion of the repellent coating may reduce or prevent ice build-up on the repellent surface. The repellent coating or surface may also reduce the time required to remove ice which has formed on a substrate when the substrate is thawed/defrosted.

The outer exposed surface 253 is (e.g. ice, liquid) repellent such that the the receding contact angle, and preferably the advancing contact angle, of the surface with water is least 90, 95, 100, 105, 110, or 115 degrees. The receding contact angle, and preferably the advancing contact angle, is no greater than 135, 134, 133, 132, 131 or 130 degrees and in some embodiments, no greater than 129, 128, 127, 126, 125, 124, 123, 122, 121, or 120 degrees. The difference between the advancing and/or receding contact angle with water of the (e.g. ice, liquid) repellent surface layer can be at least 5, 10, 15, 20, 25, 30, 35, 40, 45, or 50 degrees. In some embodiments, the difference between the advancing and receding contact angle with water of the surface layer is no greater than 15, 14, 13, 12, 11, 10, 9, 8, 7, 6, 5, 4, 3, 2, or 1 degree. As the difference between the advancing and receding contact angle with water increases, the tilt angle needed to slide or roll off a (e.g. water) droplet from a planar surface increases. One of ordinary skill appreciates that deionized water is utilized when determining contact angles with water.

In some embodiments, the outer exposed surface 253 exhibits a contact angle in the ranges just described after soaking in water for 24 hours at room temperature (25°C). The contact angle of the (e.g. ice, liquid) repellent surface can also be evaluated with other liquids instead of water such as a solution of 10% by weight 2-n-butoxyethanol and 90% by weight deionized water. In some embodiments, the advancing contact angle with such 2-n-butoxyethanol solution is at least 50, 51, 52, 53, 54, 55, 56, 57, 58, 59, 60, 61, 62, 63, 64, 65, 66, 67, 68, 69, 70 degrees and in some embodiments at least 75 or 80 degrees. In some embodiments, the receding contact angle with such 2-n-butoxyethanol solution is at least 40, 45, 50, 55, 60, 65, or 70 degrees. In some embodiments, the advancing and/or receding contact angle of the (e.g. ice, liquid) repellent surface with such 2-n-butoxyethanol solution is no greater than 100, 95, 90, 85, 80, or 75 degrees.

The surface layer is not a lubricant impregnated surface. Rather the outer exposed surface is predominantly a solid (e.g. ice, liquid) repellent material. In this embodiment, less than 50, 45, 40, 35, 30, 25, 20, 15, 10, 5, 4, 3, 2, 1, 0.5, 0.1, 0.005, 0.001% of the surface area is a liquid lubricant. Rather, at least 50, 55, 60, 65, 70, 75, 80, 85, 90, 95, 96, 97, 98, 99, 99.5%, or greater of the outer exposed surface is a solid repellent material, as described herein. Thus, a liquid (e.g. water, oil, paint) or solid (e.g. ice) that is being repelled comes in contact with and is repelled by the solid repellent material.

The repellent material is generally a solid at the use temperature of the coated substrate or article, which can be as low as -51.1°C (-60°F) or -62.2 (-80°F), yet more typically ranges from -40°C to 53.0°C (-40°F to 120°F). For outdoor usage in moderate climates, the typical use temperature may be at least -28.9°C (-20°F), -23.3°C (-10°F), -17.8°C (0°F), or -12.2°C (10°F). In typical embodiments, the repellent material is a solid at room temperature (e.g. 25°C) and temperatures ranging from 40°F (4.44°C) to 130°F (54.4°C). In typical embodiments the repellent material has a melting temperature (peak endotherm as measured by DSC) of greater than 25°C and also typically greater than 130°F (54.4°C). In some embodiments, the repellent material has a melting temperature no greater than 200°C. In typical embodiments, a single solid repellent material is utilized. However, the coating composition may contain a mixture of solid repellent materials.

The repellent material has no solubility or only trace solubility with water, e.g., a solubility of 0.01 g/l or 0.001 g/l or less.

The (e.g. liquid, ice) repellent surface layer comprises a siloxane material and a. non-fluorinated organic polymeric binder. In typical embodiments, a major amount of non-fluorinated polymeric binder is combined with a sufficient amount of siloxane material that provides the desired ice and liquid repellency properties, as previously described.

In typical embodiments, the amount of siloxane material is at least about 0.005, 0.10, 0.25, 0.5, 1.5, 2.0, or 2.5 wt.-% and in some embodiments, at least about 3.0, 3.5, 4.0, 4.5, or 5 wt.-%. The amount of siloxane material is typically no greater than 50, 45, 40, 35, 30, 25, 20, or 15 wt.-% of the sum of the siloxane material and non-fluorinated polymeric binder.

The (e.g. liquid, ice) repellent surface comprises a siloxane (e.g. PDMS) material. In some embodiments, the siloxane (e.g. PDMS) material is a solid rather than a liquid (e.g. lubricant) at 25°C and at temperatures ranging from 40°F (4.44°C) to 130°F (54.4°C). In typical embodiments the siloxane (e.g. PDMS) material is free of fluorinated groups and thus free of fluorine atoms. In other embodiments, a predominantly siloxane (e.g. PDMS) material may further comprise one or more fluorinated groups.

In some embodiments, a major amount of non-fluorinated polymeric binder or thermally processible polymer is combined with a sufficient amount of siloxane (e.g. PDMS) material that provides the desired repellency properties, as previously described.

In some embodiments, the silicone material is a compound, oligomer or polymer having a polysiloxane backbone and more typically a polydimethylsiloxane backbone. The polysiloxane backbone may further comprise other pendent groups, such as hydrocarbon (e.g. preferably alkyl) groups. The silicone material typically does not comprise vinyl groups or other polymerizable group that would result in the silicone material forming a crosslinked network.

In some embodiments, the siloxane (e.g. PDMS) material (e.g. oligomer or polymer) comprises at least 50, 55, 60, 65, 70, 75, 80, 85, 90 or 95 wt.-% polydimethylsiloxane backbone. The siloxane (e.g. PDMS) material may further comprise pendent longer chain hydrocarbon (e.g. preferably alkyl) groups in an amount of at least 5, 10, 15, 20, 25, 30, or 35 wt-% of the siloxane (e.g. PDMS) material.

The siloxane (e.g. PDMS) oligomer may have a number average molecular weight (Mn) of at least 1500 or 2000 g/mole as measured by Gel Permeation Chromatography using polystyrene standards. The siloxane oligomer typically has a molecular weight (Mn) no greater than 10,000, 9000, 8000, or 7000 g/mole. The siloxane (e.g. PDMS) polymer typically has a molecular weight (Mn) greater than 10,000; 15,000; or 20,000 g/mole. In some embodiments, the molecular weight of the siloxane oligomer is no greater than 100,000; 75,000; or 50,000 g/mole.

The siloxane (e.g. PDMS) material comprises pendent longer chain hydrocarbon (e.g. preferably alkyl) groups wherein the longer chain hydrocarbon (e.g. preferably alkyl) groups average at least 8, 10, 12, 14, 16, 18, or 20 carbon atoms. In some embodiments, the siloxane (e.g. PDMS) material comprises pendent longer chain hydrocarbon (e.g. preferably alkyl) groups wherein the longer chain hydrocarbon (e.g. preferably alkyl) groups average greater than 20 carbons atoms such as at least 25, 30, 35, or 40. The pendent longer chain hydrocarbon (e.g. preferably alkyl) groups typically average no greater than 75, 70, 65, 60, or 50 carbon atoms.

In some embodiments, the siloxane (e.g. PDMS) material may be characterized as an alkyl dimethicone. The alkyl dimethicone comprises at least one linear, branched, or cyclic alkyl group averaging at least 8, 10, or 12 carbon atoms such as lauryl dimethicone, depicted as follows:

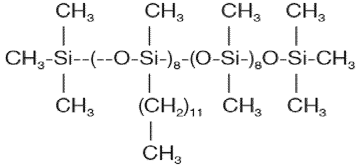

In some embodiments, the alkyl dimethicone comprises at least one linear, branched, or cyclic alkyl group averaging at least 14, 16, or 18 carbon atoms such as cetyl dimethicone and stearyl dimethicone.

These materials are characterized by having a (e.g. linear) polysiloxane backbone having terminal alkyl (C1-C4, typically methyl) silane groups and a pendent (e.g. linear) alkyl group.

Preferred alkyl dimethicones typically have the structure: 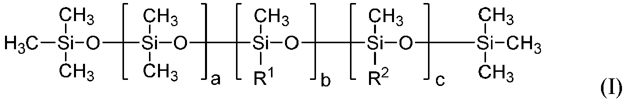 wherein the sum of (a + b + c) is between about 100 and 1000, for example between about 200 and 500 or between about 300 and 400; the ratio of a to the sum of (b + c) is about 99.9:0.1 to 80:20, or about 99:1 to 85:15, or about 99:1 to 90:10, or about 99:1 to 92:8, or about 98:2 to 93:7 or about or about 98:2 to 94:6; R¹ is a linear, branched, or cyclic alkyl group having between 20 and 50 carbon atoms, for example about 22 to 46 carbon atoms, or about 24 to 40 carbon atoms; R² is a linear, branched, or cyclic alkyl or alkaryl group having between 2 and 16 carbons, for example about 4 to 16, or about 5 to 12, or about 6, to 10, or about 8 carbon atoms; and the structure is a random, block, or blocky structure. In some embodiments, the ratio of a to (b + c) in conjunction with the number of carbons in the R¹ and R² groups result in an alkyl dimethicones having greater than about 50 wt% dimethyl siloxane (a) units, or in embodiments greater than about 60 wt% dimethyl siloxane units. In some embodiments, c is 0. In some embodiments, the sum of (a + b + c) is about 300 to 400 and the ratio of a to the sum of (b + c) is about 98:2 to 94:6. In embodiments, the alkyl dimethicone is a blend of two or more species thereof, wherein the species differ in terms of the sum of (a + b + c), the ratio of a to the sum of (b + c), the value of c, or in two or more such parameters. In some embodiments, the alkyl dimethicone is a random structure. In some embodiments, R¹ is a linear alkyl group. In some embodiments, R² is a linear alkyl group.

The alkyl dimethicone materials of Formula V are characterized by having a (e.g. linear) polysiloxane backbone having terminal alkyl (C1-C4, typically methyl) silane groups and a plurality of pendent (e.g. linear) alkyl groups.

Methods of synthesizing dimethicone are known in the art. See for example US 9,187,678.

While the structure of alkyl dimethicones are generally preferably linear structures, it will be understood by those of skill that such structures as synthesized or purchased can include an (e.g. small) amount of branching. Such branching, using terminology understood by those of skill, is referred to as "T" and "Q" functionality. In any of the embodiments herein, a substantially linear alkyl dimethicone structure can contain an amount of T branching, Q branching, or both.

In some embodiments, the siloxane (e.g. alkyl dimethicone) material has a melting temperature (peak endotherm as can be measured by DSC) of at least 60 or 65.6°C (140 or 150°F) ranging up to 76.7, 79.4, or 82.2°C (170, 175, or 180°F).

The compounds described herein are not fluoroalkyl silsesquioxane materials having the chemical formula [RSiO_{3/2}]ₙ, wherein R comprises a fluoroalkyl or other fluorinated organic group.

Various non-fluorinated organic polymeric binders can be utilized. Although fluorinated organic polymeric binders could be considered, fluorinated organic polymeric binders are typically considerably more expensive than non-fluorinated binders. Further, non-fluorinated organic polymeric binders can exhibit better adhesion to non-fluorinated polymeric, metal, or other substrates.

Suitable non-fluorinated binders include for example polystyrene, atactic polystyrene, acrylic (i.e. poly(meth)acrylate), polyester, polyurethane (including polyester type thermoplastic polyurethanes "TPU"), polyolefin (e.g. polyethylene), and polyvinyl chloride. Many of the polymeric materials that a substrate can be thermally processed from, as will subsequently be described, can be used as the non-fluorinated organic polymeric binder of the organic solvent coating composition. However, in typical embodiments, the non-fluorinated organic polymeric binder is a different material than the polymeric material of the substrate. In some embodiments, the organic polymeric binder typically has a receding contact angle with water of less than 90, 80, or 70 degrees. Thus, the binder is typically not a silicone material.

In some embodiments, the non-fluorinated organic polymeric binder is a film-grade resin, having a relatively high molecular weight. Film-grade resins can be more durable and less soluble in the liquid/solid (e.g. water, oil, paint, ice) being repelled. In other embodiments, the non-fluorinated organic polymeric binder can be a lower molecular weight film-forming resin. Film-forming resins can be more compliant and less likely to affect the mechanical properties of the substrate. Viscosity and melt flow index are indicative of the molecular weight. Mixtures of (e.g. non-fluorinated) organic polymeric binders can also be used.

In some embodiments, the film-grade non-fluorinated organic polymeric binder typically has a melt flow index of at least 1, 1.5, 2, 2.5, 3, 4, or 5 g/10 min at 200°C/5kg ranging up to 20, 25, or 30 g/10 min at 200°C/5kg. The melt flow index can be determined according to ASTM D-1238. The tensile strength of the. non-fluorinated organic polymeric binder is typically at least 40, 45, 50, 55, or 60 MPa. Further, the non-fluorinated organic polymeric binder can have a low elongation at break of less than 10% or 5%. The tensile and elongation properties can be measured according to ASTM D-638.

In other embodiments, the non-fluorinated organic polymeric binders have a lower molecular weight and lower tensile strength than film-grade polymers. In one embodiment, the melt viscosity of the non-fluorinated organic polymeric binders (as measured by ASTM D-1084-88) at 400°F (204°C) ranges from about 50,000 to 100,000 cps. In another embodiment, the molecular weight (Mw) of the non-fluorinated organic polymeric binder is typically at least about 1000, 2000, 3000, 4000, or 5000 g/mole ranging up to 10,000; 25,000; 50,000; 75,000; 100,000; 200,000; 300,000; 400,000, or 500,000 g/mole. In some embodiments, the non-fluorinated organic polymeric binder has a tensile strength of at least 5, 10, or 15 MPa ranging up to 25, 30, or 35 MPa. In other embodiments, the non-fluorinated organic polymeric binder has a tensile strength of at least 40, 45, or 50 MPa ranging up to 75 or 100 MPa. In some embodiments, the non-fluorinated organic polymeric binder has an elongation at break ranging up to 25, 50, 100, 200, 300, 400, 500, 600, 700, 800, 900, 1000% or higher. In some embodiments, the non-fluorinated organic polymeric binder has a Shore A hardness of at least 50, 60, 70, or 80 ranging up to 100.

In some embodiments, the non-fluorinated organic polymeric binder is selected such that it is compliant at the use temperature of the coated substrate or article.
In this embodiment, the non-fluorinated organic polymeric binder has a glass transition temperature (Tg) as can be measured by DSC of less than 0°C or 32°F. In some embodiments, the non-fluorinated organic polymeric binder has a glass transition temperature (Tg) of less than -6.7°C (20°F), -12.2°C (10°F), -17.8°C (0°F), -23.3°C (-10°F), -28,9°C (-20°F), -34.4°C (-30°F), -40°C (-40°F), -45.6°C(-50°F), -51.1°C (-60°F), -56.7°C (-70°F), or -67.2°C (-80°F). The (Tg) of many non-fluorinated organic polymeric binder is at least -130°C.

The selection of non-fluorinated organic polymeric binder contributes to the durability of the repellent surface. In some embodiments, the repellency is retained after surface abrasion testing (according to the test method described in the examples). In some embodiments, the liquid (e.g. paint) repellency may diminish to some extent, yet remains highly repellent after surface abrasion testing. Thus, after surface abrasion testing the contact angles or ice adhesion meets the criteria previously described. In other embodiments, the repellency is retained after soaking the repellent surface in water (according to the test method described in the examples). In yet other embodiments, the repellency is retained after repeatedly forming and removing ice from the liquid repellent surface.

In typical embodiments, the non-fluorinated organic polymeric binder does not form a chemical (e.g. covalent) bond with the siloxane material as this may hinder the migration of the siloxane material to the outermost surface layer.

In some embodiments, the non-fluorinated organic polymeric binder is not curable, such as in the case of alkyd resins. An alkyd resin is a polyester modified by the addition of fatty acids and other components, derived from polyols and a dicarboxylic acid or carboxylic acid anhydride. Alkyds are the most common resin or "binder" of most commercial "oil-based" paints and coatings.

The compositions comprising a siloxane material and a non-fluorinated organic polymeric binder can be dissolved, suspended, or dispersed in a variety of organic solvents to form a coating composition suitable for use in coating the compositions onto a substrate. The organic solvent coating compositions typically contain at least about 70%, 80%, 90%, 91%, 92%, 93%, 94%, 95%, 96%, 97%, 98%, 99% organic solvent or greater, based on the total weight of the coating composition. The coating compositions typically contain at least about 0.01%, 0.1%, 0.5%, 1%, 2%, 3%, 4%, 5%, 6%, 7%, 8%, 9%, 10%, 15% or greater solids of the (e.g. non-fluorinated organic) polymeric binder and siloxane material, based on the total weight of the coating composition. However, the coating composition can be provided with an even higher amount of solids, e.g. 20, 30, 40, or 50 wt.-% solids. Suitable organic solvents include for example alcohols, esters, glycol ethers, amides, ketones, hydrocarbons, chlorohydrocarbons, hydrofluorocarbons, hydrofluoroethers, chlorocarbons, and mixtures thereof.

The coating composition may contain one or more additives provided the inclusion of such does not detract from the (e.g. liquid, ice) repellent properties.

The coating compositions can be applied to a substrate or article by standard methods such as, for example, spraying, padding, dipping, roll coating, brushing, or exhaustion (optionally followed by the drying of the treated substrate to remove any remaining water or organic solvent). The substrate can be in the form of sheet articles that can be subsequently thermally formed into a substrate or component. When coating flat substrates of appropriate size, knife-coating or bar-coating may be used to ensure uniform coating of the substrate.

The moisture content of the organic coating composition is preferably less than 1000, 500, 250, 100, 50 ppm. In some embodiments, the coating composition is applied to the substrate at a low relative humidity, e.g. of less than 40%, 30% or 20% at 25°C.

The coating compositions can be applied in an amount sufficient to achieve the desired repellency properties. Coatings as thin as 250, 300, 350, 400, 450, or 500 nm ranging up to 1, 1.5, 2, 2.5, 3, 3.5, 4, 4.5, or 5 micrometers can provide the desired repellency. However, thicker coatings (e.g., up to about 10, 15, 20 micrometers or more) can also be used. Thicker coatings can be obtained by applying to the substrate a single thicker layer of a coating composition that contains a relatively high solids concentration. Thicker coatings can also be obtained by applying successive layers to the substrate.

In another embodiment, the siloxane material can be combined with a thermally processible (e.g. thermoplastic) polymer and then melt processed into an article, substrate thereof, or surface layer thereof. In this embodiment, the siloxane material typically migrates to the surface forming a surface layer with a high concentration of siloxane material relative to the total amount of siloxane material and thermally processible polymer.

In typical embodiments, the amount of siloxane material melt additive is at least about 0.05, 0.1, 0.25, 0.5, 1.5, 2.0 or 2.5 wt.-% and in some embodiments, at least about 3.0, 3.5, 4.0, 4.5 or 5 wt.-%. The amount of siloxane material is typically no greater than 25, 20, 15, or 10 wt.-% of the sum of the siloxane material melt additive and thermally processible polymer.

To form a polymer blend by melt processing, the siloxane material can be, for example, mixed with pelletized, granular, powdered or other forms of the thermally processible polymer and then melt processed by known methods such as, for example, molding or melt extrusion. The siloxane material can be mixed directly with the polymer or it can be mixed with the polymer in the form of a "master batch" (concentrate) of the siloxane material in the polymer. If desired, an organic solution of the siloxane material can be mixed with powdered or pelletized polymer, followed by drying (to remove solvent) and then melt processing. Alternatively, the siloxane composition can be added to the polymer melt to form a mixture or injected into a molten polymer stream to form a blend immediately prior to extrusion or molding into articles.

In some embodiments, the melt processible (e.g. thermoplastic) polymer is a polyolefin, polyester, polyamide, polyurethane, or polyacrylate.

The siloxane melt additives are generally a solid at room temperature (e.g. 25°C) and at the use temperature of the article as previously described. The siloxane material and thermally processible polymer are selected such that the siloxane material is typically molten at the melt processing temperature of the mixture. In some embodiments, the siloxane material has a melt temperature no greater than 200, 190, 180, 170, or 160°C.

Extrusion can be used to form polymeric films. In film applications, a film forming polymer is simultaneously melted and mixed as it is conveyed through the extruder by a rotating screw or screws and then is forced out through a slot or flat die, for example, where the film is quenched by a variety of techniques known to those skilled in the art. The films optionally are oriented prior to quenching by drawing or stretching the film at elevated temperatures. Adhesive can optionally be coated or laminated onto one side of the extruded film in order to apply and adhere the (liquid, ice) repellent film onto a substrate.

Molded articles are produced by pressing or by injecting molten polymer from a melt extruder as described above into a mold where the polymer solidifies. Typical melt forming techniques include injection molding, blow molding, compression molding and extrusion, and are well known to those skilled in the art. The molded article is then ejected from the mold and optionally heat-treated to effect migration of the polymer additives to the surface of the article.

After melt processing, an annealing step can be carried out to enhance the development of repellent characteristics. The annealing step typically is conducted below or above the melt temperature of the polymer for a sufficient period of time. The annealing step can be optional.

The (e.g. liquid, ice) repellent coating composition can be provided on a wide variety of organic or inorganic substrates.

Suitable polymeric materials for substrates include, for example, polyesters (e.g., polyethylene terephthalate or polybutylene terephthalate), polycarbonates, acrylonitrile butadiene styrene (ABS) copolymers, poly(meth)acrylates (e.g., polymethylmethacrylate, or copolymers of various (meth)acrylates), polystyrenes, polysulfones, polyether sulfones, epoxy polymers (e.g., homopolymers or epoxy addition polymers with polydiamines or polydithiols), polyolefins (e.g., polyethylene and copolymers thereof or polypropylene and copolymers thereof), polyvinyl chlorides, polyurethanes, fluorinated polymers, cellulosic materials, and derivatives thereof. In some embodiments, where increased transmissivity is desired, the polymeric substrate can be transparent. The term "transparent" means transmitting at least 85 percent, at least 90 percent, or at least 95 percent of incident light in the visible spectrum (wavelengths in the range of 400 to 700 nanometers). Transparent substrates may be colored or colorless.

Suitable inorganic substrates include metals and siliceous materials such as glass. Suitable metals include pure metals, metal alloys, metal oxides, and other metal compounds. Examples of metals include, for example, chromium, iron, aluminum, silver, gold, copper, nickel, zinc, cobalt, tin, steel (e.g., stainless steel or carbon steel), brass, oxides thereof, alloys thereof, and mixtures thereof.

The coating composition can be used to impart or enhance (e.g. ice, aqueous liquid and/or oil) repellency of a variety of substrates and articles. The term "ice" includes any form of frozen water as previously described.

The term "aqueous" means a liquid medium that contains at least 50, 55, 60, 65, or 70 wt-% of water. The liquid medium may contain a higher amount of water such as at least 75, 80, 85, 90, 95, 96, 97, 98, 99, or 100 wt-% water. The liquid medium may comprise a mixture of water and one or more water-soluble organic cosolvent(s), in amounts such that the aqueous liquid medium forms a single phase. Examples of water-soluble organic cosolvents include for example methanol, ethanol, isopropanol, 2-methoxyethanol, (2-methoxymethylethoxy)propanol, 3-methoxypropanol, 1-methoxy-2-propanol, 2-butoxyethanol, ethylene glycol, ethylene glycol mono-2-ethylhexylether, tetrahydrofuran, 2,2,4-trimethyl-1,3-pentanediol monoisobutyrate, tetraethylene glycol di(2-ethylhexoate), 2-ethylhexylbenzoate, and ketone or ester solvents. The amount of organic cosolvent does not exceed 50 wt-% of the total liquids of the coating composition. In some embodiments, the amount of organic cosolvent does not exceed 45, 40, 35, 30, 25, 20, 15, 10 or 5 wt-% organic cosolvent. Thus, the term aqueous includes (e.g. distilled) water as well as water-based solutions and dispersions such as paint.

Objects and advantages of this invention are further illustrated by the following examples, but the particular materials and amounts thereof recited in these examples, as well as other conditions and details, should not be construed to unduly limit this invention. These examples are for illustrative purposes only and are not meant to be limiting on the scope of the appended claims.

### Methods

### Method for Contact Angle Measurements

Water and hexadecane contact angles were measured using a Ramé-Hart goniometer (Ramé-Hart Instrument Co., Succasunna, NJ). Advancing (*θ_{adv}*) and receding (*θ_{rec}*) angles were measured as the test liquid (e.g. water or hexadecane) was supplied *via* a syringe into or out of sessile droplets (drop volume ~5 µL). Measurements were taken at 2 different spots on each surface, and the reported measurements are the averages of the four values for each sample (a left-side and right-side measurement for each drop).
Ice Adhesion Cuvette Method: A hole is punched into the side wall near the bottom of a cuvette( having a 1 cm x 1 cm cross-section and a height of 4.4 cm). The cuvette is inverted such that its opening is placed in contact with the test surface, and a rubber band is wrapped around the cuvette to ensure constant contact with the substrate. This setup is placed in an environmental chamber at -20 °C for ~30 min, and 1 mL of water at 0 °C is injected through the hole into the cuvette. The water comes into contact with the test substrate and a column of ice encased in the cuvette forms when the sample is held at -20 °C for 15-20 hours. The rubber band is carefully removed and the iced sample is mounted onto the Iₘₐₛₛ test apparatus. The force required to detach the ice columns from the test substrates was measured by propelling the force probe into the side of the column at a velocity of 66 millimeter/minute (2.6"/minute). The probe was located ~1mm above the substrate to minimize torque on the ice columns.

### Example 1 (EX1) - Preparation of Film with Siloxane Melt Additive

A siloxane melt additive (alkyl dimethicone) was synthesized as described in Example 14 of US 9,187,678. The alkyl dimethicone was compounded into NA217000 LDPE (Lyondell Basell, Houston, TX) at a loading of 15 wt% using a 25 mm twin screw extruder held at 190° C. The alkyl dimethicone was delivered to the extruder as a liquid at 120° C by means of a heated gear pump and transfer line. The masterbatch melt was extruded through a stranding die into a chilled water bath and pelletized at a rate of 13.6 Kg/hour. These 15 wt% alkyl dimethicone masterbatch pellets were then admixed with NA217000 LDPE pellets at a ratio which yielded a pellet mixture comprising 3 wt% alkyl dimethicone in LDPE.

This 3 wt% alkyl dimethicone mixture was extrusion coated sequentially onto both sides of 50.8 micrometer (2 mil) thick PET film (primed on both sides, 3M Company) using the following procedure. The pellet blend was fed, via a single feed hopper, at a rate of 9.1 kg/hr (20 lbs/hr) into an extruder and die operating at a temperature of 260°C (500 °F). The composite extrudate exited the drop die opening and traveled approximately 10 cm to a nip where the composite was contacted with the primed PET and solidified through a two roll nip equipped with a rubber and a steel roller. The alkyl dimethicone/LDPE layer contacted a smooth chilled steel roll which was used to accelerate the solidification of the layers. The line speed was 15.24 m/min (50 ft/min), yielding an extruded layer thickness of 25.4 micrometer (1 mil). The final film construction consisted of a 50.8 micrometer (2 mil) thick PET film sandwiched between 25.4 micrometer (1 mil) thick layers comprising 3 wt% alkyl dimethicone in LDPE.

The contact angles of EX1 were determined in the same manner as previously described. The results were as follows:

| | **Water Contact Angles** | | | **10% (by wt.) aqueous 2-n-butoxyethanol Contact Angles** | | |
|---|---|---|---|---|---|---|
| **Example** | **θ_{adv}** | **θ_{rec}** | **CAH (θ_{adv} -θ_{rec})** | **θ_{adv}** | **θ_{rec}** | **CAH (θ_{adv} -θ_{rec})** |
| EX1 | 112 | 97 | 15 | 56 | 47 | 9 |

### Surface Abrasion Test

A sample of sufficient size (e.g., 6 cm by 2 cm) was prepared and mounted on a Taber Abraser (Taber Industries 5750 Linear Abraser). A crockmeter square (AATC Crockmeter Square from Testfabrics, Inc.) was attached to the abraser head by means of a rubber band. No additional weights were placed on top of the abraser head. The cycle speed was set to 15 cycles/min, and each substrate was subjected to 2 abrasion cycles (or in otherwords that abraser head passed back and forth twice).

Contact angles with a solution containing 10% by weight of 2-n-butoxyethanol and 90% by weight deionized water were tested after being subjected to this surface abrasion.

| | **10% (by wt.) aqueous 2-n-butoxyethanol Contact Angles After Abrasion** | | |
|---|---|---|---|
| **Example** | **θ_{adv}** | **θ_{rec}** | **CAH (θ_{adv} -θ_{rec})** |
| EX1 | 53 | 45 | 8 |

The repellency of EX1 after abrasion was also evaluated by measuring the contact angles with water as previously described. The results were as follows:

| | **Water Contact Angles After Abrasion** | | |
|---|---|---|---|
| **Example** | **θ_{adv}** | **θ_{rec}** | **CAH (θ_{adv} -θ_{rec})** |
| EX1 | 109 | 99 | 10 |

The ice adhesion of EX 1 was evaluated according to the Cuvette method previously described. The ice adhesion was 143 kPa with a standard deviation of 21.

## Claims

1. An article subject to ice formation during normal use comprising a repellent surface such that the receding contact angle of the surface with water ranges from 90 degrees to 135 degrees, said receding contact angle being measured in accordance with the Method of Contact Angle Measurement set out in the description, wherein the repellent surface comprises a siloxane material and a non-fluorinated organic polymeric binder, the siloxane material comprising terminal silane groups and pendent hydrocarbon groups wherein at least one hydrocarbon groups averaging at least 8 carbon atoms; and wherein the article is selected from heat exchangers of air conditioners or refrigeration; sign faces, signal transmission lines, telephone and electrical cables, satellite dishes, antennas, wind turbine blades, automobiles, railroad cars, aircraft, watercraft, ice manufacturing articles; ice-cube trays; commercial and residential refrigerators and freezers; cryogenic facilities; buildings, roofing, dams, oil drilling platforms, outdoor sporting equipment, recreational vehicles; and snow removal equipment.

2. The article of claim 1 wherein the siloxane material has a number average molecular weight of at least 1500 g/mole and no greater than 100,000 g/mole as measured by Gel Permeation Chromatography using polystyrene standards.

3. The article of claim 1 wherein the siloxane material has a melt temperature of no greater than 200°C, said melting temperature being determined using DSC measurements and detection of endothermic peak.

4. The article of claims 1-3 wherein the hydrocarbon moiety is a saturated alkyl moiety.

5. The article of claim 1-4 wherein the non-fluorinated polymeric binder is selected from polystyrene, acrylic, polyester, polyurethane, polyolefin, and polyvinyl chloride.

6. The article of claims 1-5 wherein the repellent surface exhibits one or more properties selected from:
i) a difference between an advancing contact angle and the receding contact angle with water of less than 20 degrees;
ii) a receding contact angle with water of at least 90 degrees after soaking in water for 24 hours;
iii) a receding contact angle with a 10% by weight aqueous solution of 2-n-butoxyethanol of at least 40 degrees;
iv) a receding contact with water of at least 90 degrees after 2 abrasion cycles at 15 cycles/minutes with a Taber Linear Abraser;
said advancing and receding contact angles being measured in accordance with the Method of Contact Angle Measurement set out in the description.

7. The article of claims 1-6 wherein the siloxane material is not a fluoroalkyl silsesquioxane.

8. The article of claims 1-7 wherein the article comprises the repellent surface disposed on a substrate.

9. The article of claim 8 wherein the substrate is a metal substrate.

10. The article of claims 1-9 wherein the repellent surface of the article exhibits a lower force of ice adhesion in comparison to the same article without the repellent surface, said force of ice adhesion being determined in accordance with the Ice Adhesion Cuvette Method set out in the description.

11. A method of making an article comprising:
providing an article subject to ice formation during normal use, said article being selected from heat exchangers of air conditioners or refrigeration; sign faces, signal transmission lines, telephone and electrical cables, satellite dishes, antennas, wind turbine blades, automobiles, railroad cars, aircraft, watercraft, ice manufacturing articles; ice-cube trays; commercial and residential refrigerators and freezers; cryogenic facilities; buildings, roofing, dams, oil drilling platforms, outdoor sporting equipment, recreational vehicles; and snow removal equipment; and
providing a liquid repellent surface according to any of the embodiments of claims 1-10 on at least a portion of the article.

12. The method of claim 11 wherein the repellent surface is provided by coating the article with a composition comprising an organic solvent, a siloxane material and a non-fluorinated polymeric binder; and removing the organic solvent or
is provided by forming the article or a surface layer thereof from a melt processible polymer further comprising a siloxane material.

## Patentansprüche

1. Ein Gegenstand, der bei normaler Verwendung einer Eisbildung ausgesetzt ist, aufweisend eine abweisende Oberfläche, derart dass der Rückzugsrandwinkel der Oberfläche mit Wasser in einem Bereich von 90 Grad bis 135 Grad liegt, wobei der Rückzugsrandwinkel gemäß dem in der Beschreibung dargelegten Verfahren einer Randwinkelmessung gemessen wird, wobei die abweisende Oberfläche ein Siloxanmaterial und ein nicht-fluoriertes organisches polymeres Bindemittel aufweist, das Siloxanmaterial aufweisend Silanendgruppen und seitenständige Kohlenwasserstoffgruppen, wobei mindestens eine Kohlenwasserstoffgruppe durchschnittlich mindestens 8 Kohlenstoffatome aufweist; und wobei der Gegenstand ausgewählt ist aus Wärmetauschern von Klimaanlagen oder Kältetechnik; Schilderflächen, Signalübertragungsleitungen, Telefon- und Elektrokabeln, Satellitenschüsseln, Antennen, Windturbinenblättern, Kraftfahrzeugen, Eisenbahnwaggons, Luftfahrzeugen, Wasserfahrzeugen, Eisherstellungsgegenständen; Eiswürfelschalen; gewerblichen und privaten Kühlschränken und Gefriertruhen; kryogenen Anlagen; Gebäuden, Bedachung, Staudämmen, Ölbohrplattformen, Sportausrüstung für den Außenbereich, Freizeitfahrzeugen; und Schneeräumausrüstung.

2. Der Gegenstand nach Anspruch 1, wobei das Siloxanmaterial ein Zahlenmittel des Molekulargewichts von mindestens 1500 g/mol und nicht größer als 100.000 g/mol, wie durch Gelpermeationschromatographie unter Verwendung von Polystyrolstandards gemessen, aufweist.

3. Der Gegenstand nach Anspruch 1, wobei das Siloxanmaterial eine Schmelztemperatur von nicht größer als 200 °C aufweist, wobei die Schmelztemperatur unter Verwendung von DSC-Messungen und einer Detektion eines endothermen Peaks bestimmt wird.

4. Der Gegenstand nach den Ansprüchen 1 bis 3, wobei der Kohlenwasserstoffrest ein gesättigter Alkylenrest ist.

5. Der Gegenstand nach den Ansprüchen 1 bis 4, wobei das nicht-fluorierte polymere Bindemittel aus Polystyrol, Acryl, Polyester, Polyurethan, Polyolefin und Polyvinylchlorid ausgewählt ist.

6. Der Gegenstand nach den Ansprüchen 1 bis 5, wobei die abweisende Oberfläche eine oder mehrere Eigenschaften vorweist, die ausgewählt sind aus:
i) einem Unterschied zwischen einem Fortschrittsrandwinkel und dem Rückzugsrandwinkel mit Wasser von weniger als 20 Grad;
ii) einem Rückzugsrandwinkel mit Wasser von mindestens 90 Grad nach einem Einweichen in Wasser für 24 Stunden;
iii) einem Rückzugsrandwinkel mit einer 10 Gew.-%igen wässrigen Lösung von 2-n-Butoxyethanol von mindestens 40 Grad;
iv) einem Rückzugsrandwinkel mit Wasser von mindestens 90 Grad nach 2 Abriebzyklen bei 15 Zyklen/Minute mit einem Taber-Linearabriebmessgerät;
wobei der Fortschrittsrandwinkel und der Rückzugsrandwinkel gemäß dem in der Beschreibung dargelegten Verfahren der Randwinkelmessung gemessen werden.

7. Der Gegenstand nach den Ansprüchen 1 bis 6, wobei das Siloxanmaterial kein Fluoralkyl-Silsesquioxan ist.

8. Der Gegenstand nach den Ansprüchen 1 bis 7, wobei der Gegenstand die abweisende Oberfläche aufweist, die auf einem Substrat angeordnet ist.

9. Der Gegenstand nach Anspruch 8, wobei das Substrat ein Metallsubstrat ist.

10. Der Gegenstand nach den Ansprüchen 1 bis 9, wobei die abweisende Oberfläche des Gegenstands eine geringere Eisadhäsionskraft im Vergleich zu dem gleichen Gegenstand ohne die abweisende Oberfläche vorweist, wobei die Eisadhäsionskraft gemäß der in der Beschreibung dargelegten Eisadhäsionsküvettenmethode bestimmt wird.

11. Ein Verfahren zum Herstellen eines Gegenstands, aufweisend:
Bereitstellen eines Gegenstands, der bei normaler Verwendung der Eisbildung ausgesetzt ist, wobei der Gegenstand ausgewählt ist aus Wärmetauschern von Klimaanlagen oder Kältetechnik; Schilderflächen, Signalübertragungsleitungen, Telefon- und Elektrokabeln, Satellitenschüsseln, Antennen, Windturbinenblättern, Kraftfahrzeugen, Eisenbahnwaggons, Luftfahrzeugen, Wasserfahrzeugen, Eisherstellungsgegenständen; Eiswürfelschalen; gewerblichen und privaten Kühlschränken und Gefriertruhen; kryogenen Anlagen; Gebäuden, Bedachung, Staudämmen, Ölbohrplattformen, Sportausrüstung für den Außenbereich, Freizeitfahrzeugen; und Schneeräumausrüstung; und
Bereitstellen einer flüssigkeitsabweisenden Oberfläche nach einem der Ausführungsformen der Ansprüche 1 bis 10 auf mindestens einem Abschnitt des Gegenstands.

12. Das Verfahren nach Anspruch 11, wobei die abweisende Oberfläche durch eine Beschichtung des Gegenstands mit einer Zusammensetzung, aufweisend ein organisches Lösungsmittel, ein Siloxanmaterial und ein nicht-fluoriertes polymeres Bindemittel; und ein Entfernen des organischen Lösungsmittels bereitgestellt wird oder
durch ein Bilden des Gegenstands oder einer Oberflächenschicht davon aus einem schmelzverarbeitbaren Polymer, ferner aufweisend ein Siloxanmaterial, bereitgestellt wird.

## Revendications

1. Article sujet à la formation de glace pendant une utilisation normale, comprenant une surface répulsive de telle sorte que l'angle de contact sortant de la surface avec de l'eau va de 90 degrés à 135 degrés, ledit angle de contact sortant étant mesuré conformément à la méthode de mesure d'angle de contact décrite dans la description, dans lequel la surface répulsive comprend un matériau siloxane et un liant polymère organique non fluoré, le matériau siloxane comprenant des groupes silane terminaux et des groupes hydrocarbonés pendants, dans lequel au moins un groupe hydrocarboné a une moyenne d'au moins 8 atomes de carbone ; et dans lequel l'article est choisi parmi des échangeurs de chaleur de climatiseurs ou de réfrigération ; panneaux de signalisation, lignes de transmission de signaux, câbles téléphoniques et électriques, antennes paraboliques, antennes, pales d'éoliennes, automobiles, wagons de chemin de fer, aéronefs, embarcations, articles de fabrication de glace ; bacs à glaçons ; réfrigérateurs et congélateurs commerciaux et résidentiels ; installations cryogéniques ; bâtiments, toitures, barrages, plates-formes de forage pétrolier, équipements sportifs de plein air, véhicules de loisirs ; et équipements de déneigement.

2. Article selon la revendication 1, dans lequel le matériau siloxane a une masse moléculaire moyenne en nombre d'au moins 1500 g/mole et ne dépassant pas 100 000 g/mole, telle que mesurée par chromatographie par perméation de gel à l'aide d'étalons de polystyrène.

3. Article selon la revendication 1 dans lequel le matériau siloxane a une température de fusion non supérieure à 200 °C, ladite température de fusion étant déterminée à l'aide de mesures DSC et de la détection de pic endothermique.

4. Article selon les revendications 1 à 3, dans lequel le fragment d'hydrocarbure est un fragment d'alkyle saturé.

5. Article selon les revendications 1 à 4, dans lequel le liant polymère non fluoré est choisi parmi polystyrène, acrylique, polyester, polyuréthane, polyoléfine, et chlorure de polyvinyle.

6. Article selon les revendications 1 à 5, dans lequel la surface répulsive a une ou plusieurs propriétés choisies parmi :
i) une différence entre un angle de contact rentrant et l'angle de contact sortant avec l'eau de moins de 20 degrés ;
ii) un angle de contact sortant avec l'eau d'au moins 90 degrés après trempage dans l'eau pendant 24 heures ;
iii) un angle de contact sortant avec une solution aqueuse de 10 % en poids de 2-n-butoxyéthanol d'au moins 40 degrés ;
iv) un contact sortant avec l'eau d'au moins 90 degrés après 2 cycles d'abrasion à 15 cycles/minutes avec un abrasimètre linéaire Taber ;
lesdits angles de contact rentrant et sortant étant mesurés conformément à la méthode de mesure d'angle de contact décrite dans la description.

7. Article selon les revendications 1 à 6, dans lequel le matériau siloxane n'est pas un fluoroalkyl silsesquioxane.

8. Article selon les revendications 1 à 7, dans lequel l'article comprend la surface répulsive disposée sur un substrat.

9. Article selon la revendication 8, dans lequel le substrat est un substrat métallique.

10. Article selon les revendications 1 à 9, dans lequel la surface répulsive de l'article présente une force d'adhérence de glace plus faible par comparaison avec le même article sans la surface répulsive, ladite force d'adhérence de glace étant déterminée conformément à la méthode de cuvette d'adhérence de glace décrite dans la description.

11. Procédé de fabrication d'un article comprenant :
la fourniture d'un article sujet à la formation de glace au cours d'une utilisation normale, ledit article étant choisi parmi des échangeurs de chaleur de climatiseurs ou de réfrigération ; panneaux de signalisation, lignes de transmission de signaux, câbles téléphoniques et électriques, antennes paraboliques, antennes, pales d'éoliennes, automobiles, wagons de chemin de fer, aéronefs, embarcations, articles de fabrication de glace ; bacs à glaçons ; réfrigérateurs et congélateurs commerciaux et résidentiels ; installations cryogéniques ; bâtiments, toitures, barrages, plates-formes de forage pétrolier, équipements sportifs de plein air, véhicules de loisirs ; et équipements de déneigement ; et
la fourniture d'une surface repoussant les liquides selon l'un quelconque des modes de réalisation selon les revendications 1 à 10 sur au moins une partie de l'article.

12. Procédé selon la revendication 11, dans lequel la surface répulsive est obtenue par revêtement de l'article avec une composition comprenant un solvant organique, un matériau siloxane et un liant polymère non fluoré ; et élimination du solvant organique ou
est obtenue par formation de l'article ou d'une couche superficielle de celui-ci à partir d'un polymère transformable en fusion comprenant en outre un matériau siloxane.
